# FASCICULE DE BREVET EUROPEEN

(11) **EP 2 833 262 B1**
(45) Date de publication et mention de la délivrance du brevet: **30.10.2019**
(21) Numéro de dépôt: 14178984.2
(22) Date de dépôt: 29.07.2014
(51) Int. Cl.: G06F 9/445, G06F 12/06, G06F 12/14, G06F 21/35, G06F 9/50, G07F 7/10, G06F 8/61, G06F 21/57, G06F 21/77, G06Q 20/32

(54) **Procédé d'installation d'une application sur un élément sécurisé**
Verfahren zur Installation einer Anwendung auf einem gesicherten Element
Method for installing an application on a secure element

(30) Priorité: 31.07.2013 FR 1357607
(43) Date de publication de la demande: 04.02.2015
(73) Titulaire: IDEMIA France, 92400 Courbevoie (FR)
(72) Inventeur: Drouard, Mathieu, 92700 COLOMBES (FR); Trubert, Rozenn, 92700 COLOMBES (FR)
(74) Mandataire: Santarelli

(56) Documents cités:
- GB-A- 2 350 703
- US-A1- 2006 157 571
- US-A1- 2013 185 740
- US-B1- 6 480 935
- US-B1- 7 117 012

## Description

La présente invention concerne un procédé d'installation d'une application sur un élément sécurisé, le procédé étant mis en oeuvre par l'élément sécurisé.

Un élément sécurisé se présente par exemple sous la forme d'une carte à microcircuit, c'est-à-dire d'une une carte mince comprenant un microcircuit embarqué. Il peut aussi se présenter sous la forme d'un microcircuit embarqué et soudé à un dispositif, mais distinct du processeur principal dudit dispositif. On parle alors parfois d'élément sécurisé embarqué.

Un élément sécurisé répond généralement au standard ISO/IEC 7816 et/ou aux normes Critères Communs et/ou aux normes FIPS. Il offre une sécurité matérielle et logicielle, qui est par exemple définie dans ces mêmes normes. Il comprend de la mémoire apte à stocker des données et des applications. Il comprend aussi un système d'exploitation, chargé d'exécuter un ensemble d'instructions, qui permet par exemple aux applications de manipuler ces données. Un élément sécurisé dispose encore le plus souvent d'au moins une interface de communication. Lorsqu'il se présente sous la forme d'une carte à microcircuit, cette interface de communication peut être une plaque de contact. Cette interface de communication peut encore être une antenne permettant de communiquer avec l'extérieur, par exemple au moyen d'un lecteur sans contact apte à interfacer ladite antenne. Cette interface permet au microcircuit de communiquer avec un dispositif externe, à l'aide de commandes, par exemple de type APDUs (Application Protocol Data Unit).

Un tel élément sécurisé est apte à traiter de manière sécurisée des données stockées dans sa mémoire et à réaliser des fonctions pour lesquelles il a reçu une ou plusieurs applications. Un tel élément sécurisé est ainsi utilisé comme moyen de paiement, moyen d'identification, titre de transport, carte de fidélité électronique, carte médicale (Carte Vitale) ou encore carte d'abonnement téléphonique UICC, plus communément appelée carte SIM.

Un élément sécurisé peut embarquer plusieurs applications, utilisant des ressources communes ou même communiquant entre elles.

À titre d'exemples d'applications, il est possible de citer une application de paiement internationale (Visa, MasterCard), de paiement nationale (Carte Bleue), de retrait d'espèces dans un distributeur automatique de billets, une application de porte-monnaie électronique, une application de gestion de cartes de fidélités, une application permettant d'authentifier un assuré social et de prouver ses droits, ou encore une application de gestion d'un abonnement de téléphonie portable.

Afin qu'une telle application puisse être utilisée, il convient au préalable que l'élément sécurisé installe l'application. Par installation, on entend la création, sur l'élément sécurisé, d'éléments nécessaires au fonctionnement de l'application, mais pas nécessairement le téléchargement d'un ou plusieurs fichiers exécutables.

Pour une même application, de nombreuses configurations sont possibles. On parle parfois de personnalisation d'une application. Cette personnalisation est par exemple mise en oeuvre par un distributeur, ou par un constructeur. Ainsi, par exemple pour une application de carte de fidélité électronique, le constructeur, fabricant de la carte peut proposer différentes options. Chaque client, typiquement distributeur d'une marque ou d'un réseau, peut choisir de personnaliser son programme de fidélité. Ainsi chaque distributeur configure et installe son application de fidélité et émet des cartes avec son application dédiée, pour ses clients finaux. Un tel client, ici distributeur, n'est le plus souvent pas un spécialiste de l'installation d'application embarquée sur carte. Aussi est-il intéressant que le procédé soit simple. À défaut, si le procédé reste complexe, il est difficilement décentralisable et incombe au spécialiste, le fabricant de la carte. De plus, un procédé complexe risque d'entraîner des erreurs, et de limiter la possibilité d'intégrer des modifications sans qu'elles n'impactent le distributeur.

Une application est ainsi installée selon les fonctionnalités que le client souhaite ou non voir présentes dans son application. Ces fonctionnalités sont identifiées à l'aide d'options de configuration transmises à l'élément sécurisé. Elles sont alors nommées paramètres de mise en oeuvre et d'installation, et engendrent la création d'une structure de fichiers, de modules et la génération de leur contenu. Ainsi, une application est associée à une structure de fichiers comprenant un répertoire (« Directory File ») qui contient lui-même un ensemble de modules, aussi dénommés fichiers élémentaires (« Elementary Files ») selon la norme ISO/IEC 7816.

Dans le domaine de l'installation d'applications sur un élément sécurisé, il existe aujourd'hui deux types d'environnement d'exécution.

Un premier type d'environnement, fondé sur l'utilisation d'une machine virtuelle, par exemple la machine virtuelle Java, est plus simple à utiliser en ce qu'il s'occupe des contingences matérielles, en particulier l'allocation de mémoire. Il suffit de lui soumettre les options de configuration et l'environnement d'exécution s'occupe par exemple d'allouer la taille de mémoire nécessaire. Cependant cette apparente simplicité, du fait de la machine virtuelle, nécessite une taille de mémoire importante et aboutit pour ces mêmes raisons à une efficacité dégradée et loin d'être optimale. De plus, un environnement fondé sur l'utilisation d'une machine virtuelle n'offre pas la possibilité de partager des données de manière unique entre deux instances d'applications.

Un deuxième type d'environnement d'exécution manipulant du code natif ne propose aucune assistance ni à l'installation, ni à la mise en oeuvre d'une application. Les programmeurs n'écrivent pas de *code natif* mais rédigent des codes sources en langage natif dont la compilation permet d'obtenir un code natif. Ce code natif ne peut s'exécuter que sur le dispositif pour lequel il est compilé. Ce code natif permet une allocation statique de la mémoire. Un exemple de langage natif est le langage de programmation dénommé langage C. Un tel environnement permet d'implémenter des fonctions d'analyse et de mettre en oeuvre une application. Cependant la configuration de l'application, la création de la structure de fichiers, la génération du contenu desdits fichiers, et son installation sur l'élément sécurisé doivent être réalisées étape par étape et de manière séquentielle.

Dans un environnement d'exécution manipulant du code natif, un utilisateur doit mettre en oeuvre manuellement la structure de fichiers adaptée à l'application, identifier le contenu de chaque module en fonction de ses options de configuration, et déterminer manuellement la taille nécessaire pour ces modules en fonction des éléments qu'ils contiennent. Ce procédé, qui respecte par exemple à la norme *Europay MasterCard Visa Common Personalization,* nécessite de transmettre un nombre important de commandes en respectant un ordre précis lors de la transmission desdites commandes, sous peine de voir l'installation de l'application échouer. Le nombre important d'échanges entraîne une durée importante du procédé de d'installation de l'application. De plus, pour des raisons de sécurité, il n'est parfois pas possible de supprimer les répertoires et modules créés sur l'élément sécurisé. En cas d'échec, l'élément sécurisé doit alors être remplacé.

Dès que l'un des éléments d'entrée change, que ce soit une option de configuration de l'application, ou encore le code stocké en mémoire non volatile, par exemple de type ROM, du microcircuit qui évolue (par exemple en cas de changement du microcircuit), le processus doit être repris en partie ou dans son ensemble. Cette situation est fastidieuse, et de plus source d'erreurs par la multiplicité des opérations élémentaires nécessaires.

Aussi convient-il de proposer une solution plus assistée et automatisant les opérations qui peuvent l'être.

On connaît toutefois, du document US 2006/157571-A1, un procédé pour installer un système de fichiers dans une carte à puce qui interprète des données de description décrivant le système de fichiers à un niveau sémantique.

Le problème que se propose de résoudre l'invention remédie à certains au moins de ces inconvénients en proposant une unique commande réalisant l'ensemble des opérations nécessaires à l'installation d'une application sur un élément sécurisé, en épargnant le plus possible à l'utilisateur les tâches fastidieuses et génératrices d'erreur.

L'invention a pour objet un procédé d'installation d'une application sur un élément sécurisé comme défini en revendication 1. Le procédé étant mis en oeuvre par l'élément sécurisé sur lequel s'exécute un environnement d'exécution manipulant un langage natif, il comprend notamment les étapes de : réception de paramètres de mise en oeuvre et d'installation de l'application, analyse des paramètres de mise en oeuvre et d'installation, calcul d'une taille mémoire nécessaire à l'installation de l'application, identification de la taille mémoire disponible, comparaison de la taille mémoire nécessaire et de la taille mémoire disponible, et si la taille mémoire disponible est supérieure ou égale à la taille mémoire nécessaire : création d'une structure de fichiers adaptée à l'application et contenant au moins un module, génération du contenu des au moins un modules adaptée à l'application.

L'application contient des modules correspondant à la ou les fonctions identifiées par les paramètres de mise en oeuvre et d'installation, au moins un des modules est partagé avec une autre application présente sur l'élément sécurisé.

Selon l'invention toujours, l'étape de calcul détermine une taille mémoire nécessaire en ajoutant une taille mémoire élémentaire pour chaque module et une taille mémoire supplémentaire pour un répertoire contenant les modules. Une taille élémentaire pour le module partagé (24) est réduite à une taille d'un moyen d'adressage (241) permettant à l'application de pointer vers le module partagé (24) déjà installé pour l'autre application.

Selon une caractéristique optionnelle de l'invention, la taille mémoire élémentaire pour un module est indiquée par un paramètre de mise en oeuvre et d'installation de l'application.

Selon une autre caractéristique optionnelle de l'invention, un module est partagé et une taille élémentaire pour ce module est alors réduite à une taille d'un moyen d'adressage.

Selon une autre caractéristique optionnelle de l'invention, une taille élémentaire pour un module est déterminée par analyse du contenu du module.

Selon une autre caractéristique de l'invention, une taille élémentaire pour un module est déterminée par analyse des au moins un élément qu'il contient.

Selon une autre caractéristique optionnelle de l'invention, un premier module contient au moins un élément partagé avec un second module, et une taille élémentaire pour cet élément est alors réduite à une taille d'un moyen d'adressage.

Selon une autre caractéristique optionnelle de l'invention, l'étape d'analyse comprend l'analyse d'une table identifiant les modules partagés entre applications et/ou les éléments partagés entre modules.

Selon une autre caractéristique optionnelle de l'invention, l'étape d'analyse comprend un ajout automatique d'un module générique, d'un module induit par un paramètre de mise en oeuvre et d'installation et/ou d'un module induit par la présence d'un autre module.

Selon une autre caractéristique de l'invention, le procédé est exécuté par l'élément sécurisé.

Un autre aspect de l'invention concerne un élément sécurisé apte à installer une application comme défini en revendication 8.

Dans un mode de réalisation particulier, les différentes étapes du procédé d'installation d'une application sont déterminées par des instructions de programmes d'ordinateurs.

D'autres caractéristiques, détails et avantages de l'invention ressortiront plus clairement de la description détaillée donnée ci-après à titre indicatif en relation avec des dessins sur lesquels :
- la figure 1 illustre un système de développement d'application pour carte à microcircuit,
- la figure 2 présente un exemple de structure de fichiers d'une application,
- la figure 3 présente un algorigramme d'un mode de réalisation d'un procédé conforme aux enseignements de l'invention.

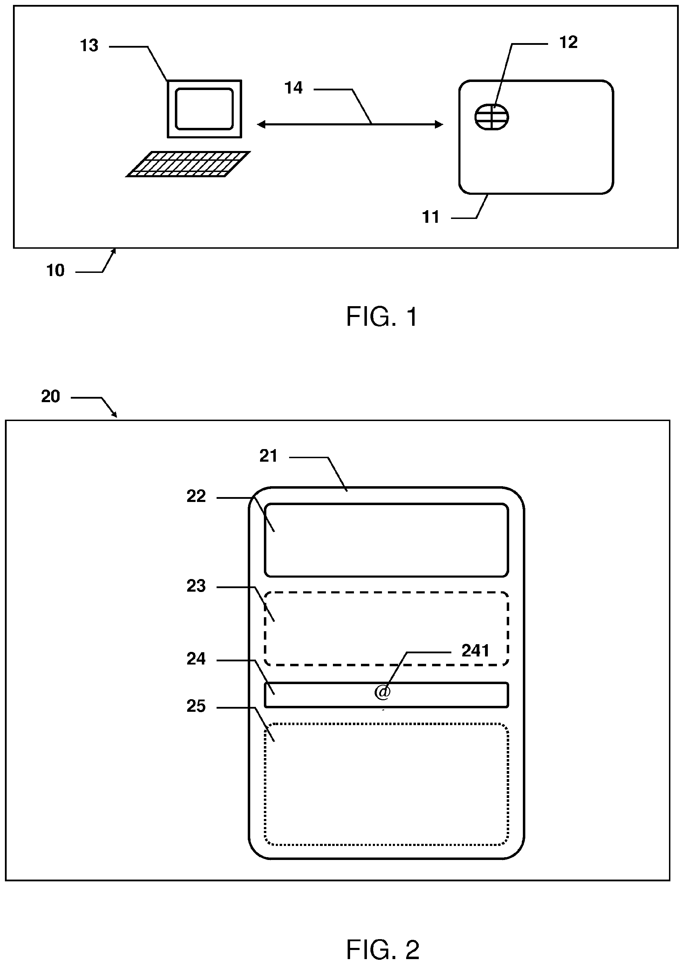

La figure 1 présente un système de développement 10 d'une application 20 illustrée en figure 2 pour carte à microcircuit 11. La carte à microcircuit 11 comprend une plaque de contact 12. La station ou terminal 13 est connectée à la carte 11 et principalement à son microcircuit par une liaison 14. Les informations transférées par la liaison 14 correspondent par exemple à des commandes APDUs. La station ou terminal 13 offre des fonctions d'interface homme-machine à la carte 11 à microcircuit qui n'en possède pas. On remarque que, dans l'exemple décrit ici, la station ou terminal 13 est limitée à ces fonctions d'interface homme-machine, et que les fonctions de traitement sont réalisées par le microcircuit de la carte 11 comme expliqué ci-après.

L'installateur pilote le système de développement au travers de cette station ou terminal 13 en sélectionnant les options de configuration associées aux fonctions ou fonctionnalités qu'il souhaite voir mises en oeuvre sur la carte à microcircuit 11. Ces options de configuration peuvent influer tant sur le contenu de l'application 20 que sur son mode d'installation. La sélection des options de configuration entrainera la transmission de paramètres correspondants de mise en oeuvre et d'installation à la carte à microcircuit 11.

Le procédé 20 décrit en figure 4 d'installation d'une application 20 sur une carte à microcircuit 11 selon l'invention est déclenché par la réception d'une commande, de préférence unique, initiée par l'installateur, via la station 13.

La réception de ces paramètres de mise en oeuvre et d'installation par la carte à microcircuit 11 déclenche la création d'une structure de fichiers composée d'un répertoire comprenant au moins un module, et la génération d'éléments enregistrés dans ces modules, comme décrit en détail dans la suite.

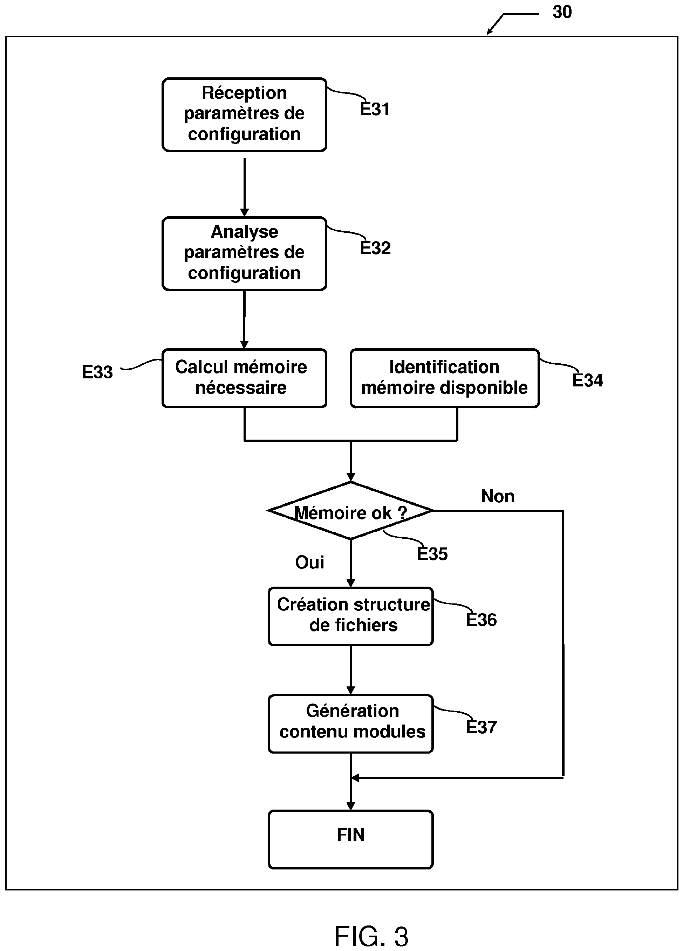

Le système illustré en figure 1 peut, dans la réalité, être plus complexe. Un distributeur, par exemple une banque, configure une application 20, par exemple une application de paiement, au travers d'une station ou terminal 13 qui offre des fonctions d'interface homme-machine. Le distributeur configure une application 20 pour chacun de ses clients. L'ensemble de ces configurations est enregistré dans une base de données, qui est transmise à un installateur, localisé dans une usine de personnalisation. Pour chaque carte à microcircuit 11, l'installateur lance alors le procédé 20 décrit en figure 3 d'installation d'une application 20.

La figure 2 présente un exemple d'une structure de fichiers d'une application 20 illustrative, comprenant quatre modules 22-25. La sélection par un utilisateur d'une application 20 et de la ou des fonctions associées entraine la création sur la carte à microcircuit du ou des modules 22-25 correspondant à cette fonction. Un module 22-25 contient des données, autrement dit des éléments de taille variable, qui sont, comme indiqué par la suite, utilisés par le programme d'une application stocké dans la mémoire non-volatile de la carte à microcircuit, par exemple la mémoire ROM.

Ainsi par exemple une application de paiement, volontairement simplifiée, peut être caractérisée par deux options de configuration : l'utilisation d'un code PIN, et l'interface à considérer lors du paiement, par exemple l'interface sans contact. Cette application comprend un module principal de paiement contenant les fonctions principales, un module d'utilisation d'un code PIN, et un module contenant les éléments nécessaires à l'utilisation de l'interface sans contact. Au niveau de la structure de fichiers, une application 20 contient tous les modules 22-25 associés aux différentes fonctions que l'on souhaite voir apparaître dans l'application 20.

Ces modules 22-25 sont générés à la volée, par la carte à microcircuit, et les éléments qu'ils contiennent peuvent dépendre des options de configuration sélectionnées par l'installateur.

La taille des modules est elle aussi dépendante des options de configuration. Ainsi, lors de la sélection d'une méthode de chiffrement asymétrique RSA, par exemple afin de chiffrer un code PIN, l'installateur peut choisir une longueur de clef de 256 bits ou 2048 bits, selon le niveau de sécurité qu'il souhaite.

Lors de son installation, une application 20 est stockée dans un répertoire 21 qui réunit et englobe tous les modules 22-25.

La figure 3 illustre un exemple de procédé d'installation d'une application 20 sur une carte à microcircuit 11. Lors d'une étape préalable, l'installateur débute le procédé en sélectionnant une première fonctionnalité associée au module 21, et une seconde fonctionnalité associée au module 24. La commande est complétée par d'autres paramètres définissant plus précisément les conditions de mise en oeuvre et d'installation. Ces paramètres permettent par exemple d'identifier le ou les modules partagés avec d'autres applications, comme cela est décrit par la suite.

Le procédé 30 selon l'invention, tel qu'illustré à la figure 3, débute alors et réalise les étapes suivantes. Une première étape E31 consiste à recevoir par la carte à microcircuit, les paramètres de mise en oeuvre et d'installation, fournis par l'installateur. La configuration et l'installation d'une application correspond à la création d'une structure de fichiers et la génération des contenus des fichiers (ou modules) dans une mémoire non volatile de la carte à microcircuit 11, typiquement une mémoire EEPROM. Le code de l'application peut-être, quant à lui, préalablement stocké dans une seconde mémoire non-volatile, typiquement une mémoire ROM. Le code source de l'application est compilé et peut être enregistré dans la mémoire ROM du microcircuit par le fondeur du microcircuit. Ce code définit en particulier une structure de fichier générique associée à l'application. Les paramètres de configuration, qui ne sont pas définis en dur dans ce code de l'application, vont eux permettre de configurer, autrement d'instancier, la structure de donnée associée à l'application en fonction des souhaits de l'utilisateur.

Une deuxième étape E32 consiste à analyser les options de configuration.

Une fois les options de configuration analysées, il est possible de procéder à une troisième étape E33 consistant à calculer une taille nécessaire à l'application 20. La méthode de calcul est détaillée par la suite. Une telle étape est nécessaire dans un environnement de langage natif, car toutes les allocations mémoires doivent nécessairement être réalisées de manière statique, c'est-à-dire en annonçant une taille effectivement allouée et qui ne peut ensuite plus être étendue. Aucune machine virtuelle ne provisionne ici d'espace à cet effet. En effet, une machine virtuelle possède des moyens d'ajout, de suppression et d'édition à la volée d'objets stockés en mémoire non volatile. La machine virtuelle organise ces objets et leur emplacement en mémoire, afin de décharger l'application de ces fonctionnalités. Ces mécanismes ne sont pas disponibles avec un environnement d'exécution manipulant un langage natif, et leur mise en oeuvre entrainerait une utilisation importante de la mémoire non volatile de type ROM. Ceci est une cause d'utilisation non économique de la mémoire à laquelle l'invention répond de manière satisfaisante en calculant et en allouant une taille mémoire juste suffisante à une application.

L'utilisation d'un langage natif permet ainsi d'économiser l'espace mémoire en l'allouant en fonction des besoins. Cette utilisation permet d'optimiser l'utilisation de la mémoire non volatile, par exemple de type EEPROM, dont le coût sur une carte à microcircuits peut être élevé. Un langage natif permet de plus de construire des applications qui s'exécutent plus rapidement, principalement du fait de l'absence de la couche machine virtuelle qui prend nécessairement des ressources temps et espace. Aussi l'utilisation d'un langage natif est-elle avantageuse en ce qu'elle permet, pour les mêmes fonctionnalités, de réaliser une application 20 qui s'exécute plus rapidement et qui utilise moins de place mémoire. Ceci permet d'optimiser les ressources nécessaires du microcircuit 11, voire de réduire son coût. Il est ainsi possible d'obtenir un dispositif apte à réaliser une fonction, composé d'une carte à microcircuit 11 équipée d'une application 20, plus performante, et moins coûteuse.

Il convient ensuite, avant de procéder à l'installation effective de l'application 20, de vérifier que la taille disponible sur la carte 11, plus particulièrement dans la mémoire non volatile du microcircuit, est suffisante, et donc supérieure ou égale à la taille nécessaire.

Pour cela, au cours d'une quatrième étape E34, il est procédé à une identification de la taille mémoire disponible. Cette taille mémoire disponible est typiquement gérée par un indicateur, présent dans la mémoire du microcircuit, et mis à jour à chaque téléchargement, à chaque installation nouvelle, ou a contrario et si les paramètres de sécurité le permettent, à chaque libération de place réalisée sur la mémoire de la carte 11. À cette étape E34, le procédé 30 utilise cette fonctionnalité pour obtenir la taille disponible.

Au cours d'une cinquième étape E35, la taille disponible, obtenue à l'étape E34, est comparée à la taille nécessaire calculée à l'étape E33.

Si la taille disponible est inférieure à la taille nécessaire, l'installation est impossible et le procédé 20 peut s'arrêter. Avantageusement, dans ce cas, une indication d'erreur peut être émise à l'attention de l'installateur qui est alors en mesure de réajuster ses options de configuration.

Si la taille disponible est supérieure ou égale à la taille nécessaire, l'installation est possible et le procédé 30 peut se poursuivre par les étapes suivantes.

Au cours d'une sixième étape E36, il peut être procédé à la création d'une structure de fichiers composée d'un répertoire comprenant des modules, dans une mémoire non-volatile du microcircuit, typiquement la mémoire EEPROM.

Au cours d'une septième étape E37, il peut être procédé à la génération, à la volée, d'éléments enregistrés dans ces modules adaptés à l'application 20.

Avantageusement, un tel procédé 30 permet de regrouper, et de réaliser de manière transparente pour l'installateur, préférentiellement en une unique commande, toutes les opérations liées à la mise en oeuvre et à l'installation d'une application 20. Une fois que l'installateur a indiqué, au moyen des options de configuration, les fonctionnalités de son application 20, toutes les opérations se déroulent automatiquement et gèrent le cas échéant les contingences matérielles, comme cela est décrit par la suite.

Le procédé 30 pourrait être exécuté en vue de personnaliser une carte à microcircuit 11. Dans ce cas, de manière optionnelle, le procédé 30 met en oeuvre une étape E38 (non représentée) au cours de laquelle l'installateur transmet à la carte à microcircuit 11 des informations de personnalisation (par exemple, le nom du porteur ou un code PIN) au moyen de commandes « *Store Data* » qui suivent par exemple la norme *Europay Mastercard Visa Common Personalization.* Au cours d'une étape E39 (non représentée), ces informations sont enregistrées dans la structure de fichiers enregistrée en mémoire non volatile EEPROM du microcircuit.

Le procédé 30 d'installation d'une application 20 sur un élément sécurisé est mis en oeuvre par l'élément sécurisé.

Une étape importante est l'étape E33 de calcul de la mémoire nécessaire à l'application 20. Comme illustrée à la figure 2, une application comprend une succession de modules 22-25, disposés dans un répertoire 21. La taille mémoire nécessaire à une application 20 est obtenue en ajoutant la taille élémentaire de chaque module 22-25 et une taille supplémentaire pour le répertoire 21 les contenant. La taille élémentaire de chaque module 22-25 peut dépendre des tailles des éléments contenus par ces modules 22-25 et sa détermination est détaillée plus avant. La taille supplémentaire dédiée au répertoire 21 peut, selon les environnements, être constante ou dépendre du nombre de modules ou du contenu des modules 22-25. La détermination de la taille élémentaire d'un module 22-25 dépend du type de module 22-25 et du contenu du module lui-même. Un module 22-25 peut être d'au moins trois types : il peut être générique, automatique ou partagé.

Selon un premier type, un module, tel le module 22, est du type générique. Ce type correspond à un module associé à une fonctionnalité explicitement sélectionnée par l'installateur au début du procédé 20. Plusieurs modes de réalisation sont ici possibles pour déterminer la taille élémentaire de ce module 22. Selon un premier mode de réalisation, la taille élémentaire est déterminée, par analyse du contenu du module 22. Cette analyse est réalisée par la carte à microcircuit elle-même. Selon un autre mode de réalisation, la taille élémentaire nécessaire à l'installation du module 22 est indiquée par l'installateur, par exemple au moyen d'un paramètre.

Selon un deuxième type, un module, tel le module 24, est du type partagé. Un tel module 24 partagé est partagé avec une autre application présente sur la même carte à microcircuit 11. Une telle configuration ne peut être mise en oeuvre que dans le cadre d'un environnement d'exécution fondé sur l'utilisation d'un langage natif.

Un tel module 24 étant nécessaire à au moins deux applications peut avantageusement n'être enregistré en mémoire qu'une seule fois. Pour cela un tel module 24 est du type générique pour une première application, et du type partagé pour une seconde application, qui le réutilise et permet d'optimiser l'utilisation de la mémoire. La première application est alors celle qui est chronologiquement la première à être installée sur la carte.

Ainsi, le module 24, préalablement associé à une première application de la carte à microcircuit, peut être totalement partagé avec une seconde application. On parle alors de partage total puisque toutes les données d'un fichier sont partagées. Cette seconde application, plutôt que de stocker le module 24 une nouvelle fois, réutilise celui, identique déjà installé par la première application. Pour cela un tel module 24 est déclaré partagé par la seconde application. Le module partagé est indiqué comme étant partagé par l'installateur, par exemple au moyen d'une option de configuration.

Pour cela il convient cependant que la seconde application en cours comprenne un moyen d'adressage 241 lui permettant de pointer ledit module 24. Une telle approche est avantageuse en ce qu'elle permet d'économiser la mémoire de la carte à microcircuit 11, la mémoire étant une ressource rare sur un support de taille aussi réduite. Une telle approche permet de définir un objet qui est partagé par plusieurs applications. Cet objet pourrait être un compteur de transactions partagé entre deux applications de paiement, par exemple « MasterCard » qui propose un moyen de paiement international et « Carte Bleue » qui propose un moyen de paiement national.

Il résulte de cette approche que la taille élémentaire à prendre en compte lors de l'étape E33 de calcul de la taille nécessaire est réduite. La taille élémentaire d'un tel module partagé 24 est réduite sensiblement à la taille du dit moyen d'adressage 241.

Selon un autre mode de réalisation, un premier module est composé d'éléments, dont au moins un est partagé avec un second module. On parle alors de partage partiel puisque seules certaines données ou éléments d'un module sont partagées avec un second module. Le partage d'un élément est indiqué par un moyen d'adressage enregistré soit dans l'élément partagé, soit dans l'entête du module contenant l'élément partagé. L'étape de calcul de la taille d'un module contenant au moins un élément partagé est similaire à l'étape de calcul de la taille d'une application contenant au moins un module partagé. Cette configuration permet, elle aussi, d'optimiser l'utilisation de la mémoire.

Selon un mode de réalisation préféré, le partage de modules et d'éléments entre différentes applications est indiqué par l'installateur au travers d'une interface homme-machine, et ces options de configuration sont traduites sous la forme d'une table de partage qui est analysée par la carte à l'étape E32. L'adressage est mis en oeuvre par la carte, et est ainsi transparent pour l'installateur.

Le troisième type de module, ou type automatique, est décrit ci-dessous. Il peut être partagé ou non. Pour ce qui concerne la détermination de la taille élémentaire d'un tel module 23, s'il est partagé, sa taille élémentaire est déterminée comme celle d'un module partagé, et s'il n'est pas partagé, les mêmes considérations que pour un module 22 générique s'appliquent.

Selon une autre caractéristique de l'invention, le procédé peut encore assister l'installateur dans sa tâche en ajoutant automatiquement certains modules, réduisant ainsi cette tâche à la fourniture ou à l'indication au procédé 20 des seuls modules spécifiques. Les modules 23 dits automatiques, sont alors ajoutés par le procédé 20, lors de l'étape E32 d'analyse des paramètres de mise en oeuvre et d'installation, sans que l'installateur ne les ait expressément fournis ou indiqués.

Un tel module automatique 23, peut comprendre, un module générique. Un module générique contient une ressource qui est utilisée par toute application. Puisqu'un tel module est indispensable à toute application, il n'est pas nécessaire de l'indiquer au procédé 20. Le procédé 20 peut l'inclure systématiquement, que l'installateur l'ait mentionné ou pas.

Un module automatique 23, peut encore comprendre un ou plusieurs modules induits 25. Un module peut être induit par une option de configuration. Ainsi si un paramètre indique, par exemple, qu'une authentification doit être réalisée par l'application 20, le ou les modules nécessaires à réaliser la fonction d'authentification sont nécessaires et le procédé 20 les inclus lors de l'étape E32 d'analyse, même si l'installateur ne les a pas explicitement mentionnés dans ses options de configuration.

Un module peut encore être induit par la présence dans les modules explicitement indiqués par l'installateur d'un module particulier. Ainsi si un module fait partie, par exemple, d'un triplet de modules toujours associés, la présence d'un de ces modules, indique que les deux autres doivent être inclus. Aussi le procédé 30 peut les inclure lors de l'étape E32 d'analyse, même s'ils ne correspondent pas directement à une option de configuration sélectionnée par l'installateur.

Ainsi, l'installateur peut n'identifier que les fonctionnalités spécifiques son application 20, selon une liste minimale. De manière transparente pour lui, les modules, génériques ou induits sont alors automatiquement installés par le procédé 30 lui-même. De plus le procédé 30 peut compléter, en cohérence, les modules manquants.

Tout ceci allège la tâche de l'installateur, tout en réduisant les risques d'erreur.

La mise en oeuvre de certaines étapes, telles que le calcul E33 de la taille mémoire nécessaire, la création E36 de la structure de fichiers, ou l'adressage d'un module partagé 24 dépend du code de l'application préalablement stocké en mémoire ROM.

Selon l'art antérieur, un inconvénient majeur en résulte en ce que toute étape dépendante du code préalablement stocké en mémoire ROM risque de devoir être adaptée lorsque le code préalablement stocké en mémoire ROM est modifié (par exemple en cas de changement du microcircuit).

Selon une caractéristique avantageuse de l'invention, le procédé 30 est capable de gérer l'installation E36 d'une application 20 en fonction du code préalablement stocké en mémoire ROM, et ce, de manière transparente pour l'installateur.

Ceci permet avantageusement, de rendre complètement transparente une opération de changement du code préalablement stocké en mémoire ROM (par exemple en cas de changement du microcircuit). Un tel changement ne nécessite qu'un rejeu du procédé 30, avec une sélection des options de configuration totalement identique pour l'installateur, le procédé 30 se chargeant de réaliser toutes les modifications induites par le changement de type de microcircuit 11 et ce automatiquement.

En particulier, lors de d'utilisation d'un nouveau canevas de structure de fichiers générique, pouvant être préalablement enregistré en mémoire ROM du microcircuit, la mise en oeuvre des étapes E33, E36 et E37 peut évoluer, mais l'invention offre l'avantage de s'adapter et de rendre ce changement transparent pour l'installateur. Ainsi, si la taille d'un objet est modifiée par le nouveau canevas de structure de fichiers générique, la valeur de la taille mémoire nécessaire est différente, mais ce changement n'impacte pas l'installateur.

Il convient de noter que le procédé selon les modes de réalisation décrits produit un dispositif. Une carte à microcircuit 11, une fois dotée d'une application devient un dispositif capable de réaliser une fonction. Ainsi une carte à microcircuit 11, ayant reçu les éléments de personnalisation nécessaires au moyen d'un tel procédé lui fournissant une application 20 devient un outil utilisable par son porteur.

Par exemple à partir d'une carte 11 vierge, et d'une application de paiement, construite et installée au moyen d'un procédé selon l'invention, il est produit une carte de paiement permettant à son utilisateur d'effectuer des paiements ou de retirer des espèces dans un distributeur automatique. Le procédé 30 transforme ainsi une carte 11 en un moyen de paiement.

## Revendications

1. Procédé d'installation d'une application (20) sur un élément sécurisé (11), ledit procédé étant mis en oeuvre par l'élément sécurisé sur lequel s'exécute un environnement d'exécution manipulant un langage natif, ***caractérisé en ce qu'il*** comprend les étapes de :
- réception (E31) de paramètres de mise en oeuvre et d'installation identifiant une ou des fonctions présentes dans l'application (20),
- analyse (E32) des paramètres de mise en oeuvre et d'installation,
- calcul (E33) d'une taille mémoire nécessaire à l'installation de l'application (20), l'application contenant des modules (22-25) correspondant à la ou les fonctions identifiées par les paramètres de mise en oeuvre et d'installation, au moins un (24) des modules étant partagé avec une autre application présente sur l'élément sécurisé (11),
- identification (E34) de la taille mémoire disponible,
- comparaison (E35) de la taille mémoire nécessaire et de la taille mémoire disponible,
- si la taille mémoire disponible est supérieure ou égale à la taille mémoire nécessaire :
- création (E36) d'une structure de fichiers pour l'application (20) et contenant au moins un des modules correspondant à la ou les fonctions identifiées par les paramètres de mise en oeuvre et d'installation,
- génération (E37) du contenu de l'au moins un des modules procédé où l'étape de calcul (E33) détermine une taille mémoire nécessaire en ajoutant une taille mémoire élémentaire pour chacun des modules (22-25) et une taille mémoire supplémentaire pour un répertoire (21) contenant les modules (22-25), et où une taille élémentaire pour le module partagé (24) est réduite à une taille d'un moyen d'adressage (241) permettant à l'application de pointer vers le module partagé (24) déjà installé pour l'autre application.

2. Procédé selon la revendication **1**, où une taille mémoire élémentaire pour un (22) desdits modules est indiquée par un paramètre de mise en oeuvre et d'installation de l'application (20).

3. Procédé selon la revendication **1**, où une taille élémentaire pour un (22) desdits modules est déterminée par analyse du contenu du module (22).

4. Procédé selon la revendication **3**, où une taille élémentaire pour un (22) desdits modules est déterminée par analyse des au moins un élément qu'il contient.

5. Procédé selon l'une des revendications **3 ou 4**, où un premier module contient au moins un élément partagé avec un second module, et où une taille élémentaire pour cet élément est réduite à une taille d'un moyen d'adressage permettant au premier module de pointer vers l'élément partagé du second module.

6. Procédé selon l'une quelconque des revendications **1 à 5**, où l'étape d'analyse (E32) comprend l'analyse d'une table identifiant les modules partagés entre applications et/ou les éléments partagés entre modules.

7. Procédé selon l'une quelconque des revendications **1 à 5**, où l'étape d'analyse (E32) comprend un ajout automatique d'un module générique, d'un module induit par un paramètre de mise en oeuvre et d'installation et/ou d'un module induit par la présence d'un autre module.

8. Elément sécurisé (11) apte à installer une application (20), ***caractérisé en ce qu'il*** comprend :
- un environnement d'exécution manipulant un langage natif s'exécutant,
- - un module de réception configuré pour recevoir des paramètres de mise en oeuvre et d'installation identifiant une ou des fonctions présentes dans l'application (20),
- un module d'analyse configuré pour analyser lesdits paramètres,
- un module de calcul configuré pour calculer une taille mémoire nécessaire à l'installation de l'application (20), l'application contenant des modules (22-25) correspondant à la ou les fonctions identifiées par les paramètres de mise en oeuvre et d'installation, au moins un (24) des modules étant partagé avec une autre application présente sur l'élément sécurisé (11),
- un module d'identification configuré pour déterminer la taille mémoire disponible,
- un module de comparaison configuré pour comparer la taille mémoire nécessaire et la taille mémoire disponible,
- un module de création configuré pour créer une structure de fichiers pour l'application (20) et contenant au moins un des modules (22-25) correspondant à la ou les fonctions identifiées par les paramètres de mise en oeuvre et d'installation, et
- un module de génération configuré pour générer le contenu de l'au moins un des modules, ledit module de calcul déterminant une taille mémoire nécessaire en ajoutant une taille mémoire élémentaire pour chacun des modules (22-25) et une taille mémoire supplémentaire pour un répertoire (21) contenant les modules (22-25), une taille élémentaire pour le module partagé (24) étant réduite à une taille d'un moyen d'adressage (241) permettant à l'application de pointer vers le module partagé (24) déjà installé pour l'autre application.

9. Programme d'ordinateur comprenant des instructions pour la mise en oeuvre d'un procédé d'installation d'une application (20) selon l'une quelconque des revendications **1 à 7**, lorsqu'il est chargé et exécuté par un processeur.

## Patentansprüche

1. Verfahren zur Installation einer Anwendung (20) auf einem gesicherten Element (11), wobei das Verfahren von dem gesicherten Element ausgeführt wird, auf dem eine Ausführungsumgebung läuft, die eine native Sprache einsetzt, ***dadurch gekennzeichnet, dass*** es die folgenden Schritte umfasst:
- Empfangen (E31) von Ausführungs- und Installationsparametern, die eine oder mehrere in der Anwendung (20) vorhandene Funktionen identifiziert,
- Analysieren (E32) der Ausführungs- und Installationsparameter,
- Berechnen (E33) einer Speichergröße, die für die Installation der Anwendung (20) erforderlich ist, wobei die Anwendung Module (22-25) enthält, die der oder den von den Ausführungs- und Installationsparametern identifizierten Funktionen entsprechen, wobei mindestens eines (24) der Module mit einer anderen auf dem gesicherten Element (11) vorhandenen Anwendung geteilt wird,
- Identifizieren (E34) der verfügbaren Speichergröße,
- Vergleichen (E35) der erforderlichen Speichergröße mit der verfügbaren Speichergröße,
- wenn die verfügbare Speichergröße größer als oder gleich der erforderlichen Speichergröße ist:
- Erstellen (E36) einer Dateistruktur für die Anwendung (20) und die mindestens eines der Module enthält, die der oder den von den Ausführungs- und Installationsparametern identifizierten Funktionen entsprechen,
- Generieren (E37) des Inhalts des mindestens einen der Module,
wobei bei dem Verfahren der Rechenschritt (E33) eine erforderliche Speichergröße bestimmt, indem er eine elementare Speichergröße für jedes der Module (22-25) und eine zusätzliche Speichergröße für ein Verzeichnis (21), das die Module (22-25) enthält, addiert, und eine elementare Größe für das geteilte Modul (24) auf eine Größe eines Adressierungsmittels (241) reduziert wird, das es der Anwendung ermöglicht, auf das bereits für eine andere Anwendung installierte geteilte Modul (24) zu zeigen.

2. Verfahren nach Anspruch **1**, wobei eine elementare Speichergröße für eines (22) der Module von einem Ausführungs- und Installationsparameter der Anwendung (20) angegeben wird.

3. Verfahren nach Anspruch **1**, wobei eine elementare Größe für eines (22) der Module durch Analysieren des Inhalts des Moduls (22) bestimmt wird.

4. Verfahren nach Anspruch **3**, wobei eine elementare Größe für eines (22) der Module durch Analysieren des mindestens einen Elements bestimmt wird, das es enthält.

5. Verfahren nach einem der Ansprüche **3 oder 4**, wobei ein erstes Modul mindestens ein mit einem zweiten Modul geteiltes Element enthält und wobei eine elementare Größe für dieses Element auf eine Größe eines Adressierungsmittels reduziert wird, das es dem ersten Modul ermöglicht, auf das geteilte Element des zweiten Moduls zu zeigen.

6. Verfahren nach einem der Ansprüche **1 bis 5**, wobei der Analyseschritt (E32) das Analysieren einer Tabelle umfasst, welche die zwischen Anwendungen geteilten Module und/oder die zwischen Modulen geteilten Elemente identifiziert.

7. Verfahren nach einem der Ansprüche **1 bis 5**, wobei der Analyseschritt (E32) ein automatisches Hinzufügen eines generischen Moduls, eines durch einen Ausführungs- und Installationsparameters bedingten Moduls und/oder eines durch das Vorhandensein eines anderen Moduls bedingten Moduls umfasst.

8. Gesichertes Element (11), das geeignet ist, eine Anwendung (20) zu installieren, ***dadurch gekennzeichnet, dass*** es umfasst:
- eine laufende Ausführungsumgebung, die eine native Sprache einsetzt,
- ein Empfangsmodul, das dazu ausgestaltet ist, Ausführungs- und Installationsparameter zu empfangen, die eine oder mehrere in der Anwendung (20) vorhandene Funktionen identifizieren,
- ein Analysemodul, das dazu ausgestaltet ist, die Parameter zu analysieren,
- ein Rechenmodul, das dazu ausgestaltet ist, eine zur Installation der Anwendung (20) erforderliche Speichergröße zu berechnen, wobei die Anwendung Module (22-25) enthält, die der oder den von den Ausführungs- und Installationsparametern identifizierten Funktionen entsprechen, wobei mindestens eines (24) der Module mit einer anderen auf dem gesicherten Element (11) vorhandenen Anwendung geteilt wird,
- ein Identifizierungsmodul, das dazu ausgestaltet ist, die verfügbare Speichergröße zu bestimmen,
- ein Vergleichsmodul, das dazu ausgestaltet ist, die erforderliche Speichergröße und die verfügbare Speichergröße zu vergleichen,
- ein Erstellungsmodul, das dazu ausgestaltet ist, eine Dateistruktur für die Anwendung (20) zu erstellen, und mindestens eines der Module (22-25) enthält, die der oder den von den Ausführungs- und Installationsparametern identifizierten Funktionen entsprechen, und
- ein Generierungsmodul, das dazu ausgestaltet ist, den Inhalt des mindestens einen der Module zu generieren, wobei das Rechenmodul eine erforderliche Speichergröße bestimmt, indem es eine elementare Speichergröße für jedes der Module (22-25) und eine zusätzliche Speichergröße für ein Verzeichnis (21), das die Module (22-25) enthält, addiert, wobei eine elementare Größe für das geteilte Modul (24) auf eine Größe eines Adressierungsmittels (241) reduziert wird, das es der Anwendung ermöglicht, auf das bereits für eine andere Anwendung installierte geteilte Modul (24) zu zeigen.

9. Computerprogramm, das Befehle umfasst, die, wenn es geladen und von einem Prozessor ausgeführt wird, ein Verfahren zur Installation einer Anwendung (20) nach einem der Ansprüche **1 bis 7** ausführen.

## Claims

1. Method for installing an application (20) on a secure element (11), said method being implemented by the secure element on which is executed an execution environment manipulating a native language, ***characterized in that it*** comprises the steps of:
- reception (E31) of implementation and installation parameters identifying a function or functions present in the application (20),
- analysis (E32) of the implementation and installation parameters,
- calculation (E33) of a memory size necessary for the installation of the application (20), the application containing modules (22-25) corresponding to the function or functions identified by the implementation and installation parameters, at least one (24) of the modules being shared with another application present on the secure element (11),
- identification (E34) of the available memory size,
- comparison (E35) of the necessary memory size and of the available memory size,
- if the available memory size is greater than or equal to the necessary memory size:
- creation (E36) of a file structure for the application (20) and containing at least one of the modules corresponding to the function or functions identified by the implementation and installation parameters,- generation (E37) of the content of the at least one of the modules,
method wherein the calculation step (E33) determines a necessary memory size by adding an elementary memory size for each of the modules (22-25) and an additional memory size for a folder (21) containing the modules (22-25), and wherein an elementary size for the shared module (24) is reduced to a size of addressing means (241) making it possible for the application to point to the shared module (24) already installed for the other application.

2. Method according to Claim **1**, wherein an elementary memory size for one (22) of said modules is indicated by an implementation and installation parameter of the application (20).

3. Method according to Claim **1**, wherein an elementary size for one (22) of said modules is determined by analysing the content of the module (22).

4. Method according to Claim **3**, wherein an elementary size for one (22) of said modules is determined by analysing the at least one element that it contains.

5. Method according to one of Claims **3 or 4**, wherein a first module contains at least one element shared with a second module, and wherein an elementary size for this element is reduced to a size of addressing means making it possible for the first module to point to the shared element of the second module.

6. Method according to any one of Claims **1 to 5**, wherein the analysis step (E32) comprises the analysis of a table identifying the modules shared between applications and/or the elements shared between modules.

7. Method according to any one of Claims **1 to 5**, wherein the analysis step (E32) comprises an automatic addition of a generic module, of a module induced by an implementation and installation parameter and/or of a module induced by the presence of another module.

8. Secure element (11) able to install an application (20), ***characterized in that it*** comprises:
- an execution environment manipulating a native language being executed,
- a reception module configured to receive implementation and installation parameters identifying a function or functions present in the application (20),
- an analysis module configured to analyse said parameters,
- a calculation module configured to calculate a memory size necessary for the installation of the application (20), the application containing modules (22-25) corresponding to the function or functions identified by the implementation and installation parameters, at least one (24) of the modules being shared with another application present on the secure element (11),
- an identification module configured to determine the available memory size,
- a comparison module configured to compare the necessary memory size and the available memory size,
- a creation module configured to create a file structure for the application (20) and containing at least one of the modules (22-25) corresponding to the function or functions identified by the implementation and installation parameters, and
- a generation module configured to generate the content of the at least one of the modules,
said calculation module determining a necessary memory size by adding an elementary memory size for each of the modules (22-25) and an additional memory size for a folder (21) containing the modules (22-25), an elementary size for the shared module (24) being reduced to a size of addressing means (241) making it possible for the application to point to the shared module (24) already installed for the other application.

9. Computer program comprising instructions for the implementation of a method for installing an application (20) according to any one of Claims **1 to 7**, when it is loaded and executed by a processor.
